# EUROPEAN PATENT APPLICATION

(11) **EP 2 821 679 A1**
(43) Date of publication of application: **07.01.2015**
(21) Application number: 13175350.1
(22) Date of filing: 05.07.2013
(51) Int. Cl.: F16K 5/04, F16K 11/085

(54) **Temperature adjustment valve**

(71) Applicant: Esbe AB, 330 21 Reftele (SE)
(72) Inventor: Johansson, Christer, 331 42 VÄRNAMO (SE)
(74) Representative: Ungsten, Magnus Torbjörn

(57) **Abstract**

The present invention relates to a temperature adjustment valve (1) for adjusting liquid flow in a heating and/or cooling system, the valve comprising a cylindrical valve chamber (5) having at least two valve ports (9, 11, 13) distributed around a circumferential chamber wall (15) of the valve chamber (5), and a rotor (23), which is rotatably seated inside said valve chamber (5) and rotatable around a rotor center axis (25), wherein the rotor (23) comprises an adjustment body (31) having a closing sector (33) arranged to sealingly contact the circumferential chamber wall (15) and to close at least one of said valve ports (9, 11, 13). The adjustment body (31) further comprises a first adjusting sector (35) arranged adjacent to the closing sector (33), wherein a distance (L1) between the chamber wall (15) and an adjusting surface (36) of the first adjusting sector (35) gradually increases with increasing distance from the closing sector (33).

## Description

### Field of the Invention

The present invention relates to a temperature adjustment valve for adjusting liquid flow in a heating and/or cooling system, the valve comprising a cylindrical valve chamber having at least two valve ports distributed around a circumferential chamber wall of the valve chamber, and a rotor, which is rotatably seated inside said valve chamber and rotatable around a rotor center axis, wherein the rotor comprises an adjustment body having a closing sector arranged to sealingly contact the circumferential chamber wall and to close one of said valve ports.

### Background of the Invention

A valve of this type may be used as a mixing and/or diverting valve in a domestic heating and/or cooling system.

WO 01/86179 A1 discloses a valve that may be used to adjust liquid flow in a pipe system. The valve enables adjustment within a certain flow range. A drawback of this valve is that the rangeability, i.e. the ratio of the maximum to minimum adjustable flow through the valve, is limited. Hence, the valve has a relatively small range of adjustable flow rates. To cover a wide range of adjustable flow rates valves of different sizes are therefore needed.

### Summary of the Invention

It is an object of the present invention to overcome the above described drawbacks, and to provide an improved temperature adjustment valve that can adjust a wide range of flow rates with high precision.

This and other objects that will be apparent from the following summary and description are achieved by a temperature adjustment valve according to the appended claims.

According to one aspect of the present disclosure there is provided a temperature adjustment valve for adjusting liquid flow in a heating and/or cooling system, such as a domestic heating and/or cooling system, the valve comprising a cylindrical valve chamber having at least two valve ports distributed around a circumferential chamber wall of the valve chamber, and a rotor, which is rotatably seated inside said valve chamber and rotatable around a rotor center axis, wherein the rotor comprises an adjustment body having a closing sector arranged to sealingly contact the circumferential chamber wall and to close one of said valve ports, wherein the adjustment body further comprises a first adjusting sector arranged adjacent to the closing sector, wherein a distance between the chamber wall and an adjusting surface of the first adjusting sector gradually increases gradually with increasing distance from the closing sector.

This valve has the advantage that an opening gap, across a circumferential direction, with increasing cross-sectional area is formed between the adjusting surface and the circumferential chamber wall as the rotor rotates to open a blocked port. Hence, the valve port pass area initially increases across the circumferential direction as the opening angle of the rotor increases. The valve port is thereby initially opened in a very smooth and controllable manner, which enables also relatively small flow rates to be adjusted with high precision. At larger opening angles the pass area increases along a circumferential direction as the opening angle of the rotor is increased. Also, the first adjusting sector allows a valve port to be closed in a very smooth and controllable manner. The valve rotor may thus assume at least a first closed position in which a first valve port is fully closed.

Furthermore, the first adjusting sector allows flows of liquid in a relatively large temperature interval, such as e.g. 0-150°C, to be adjusted with high precision and the temperature adjustment valve may thus be used even in high temperature applications.

A valve which enables good adjustability within a wide range of flow rates and/or temperatures at the same time as a particularly good precise adjustability is obtained for very small flows, is thus provided.

The first adjusting sector of the adjustment body enables non-linear valve characteristic. A valve that exhibit so-called equal percentage characteristic may thus be provided. This valve characteristic is advantageous since it enables a valve with high rangeability, i.e. a valve that can regulate a wide range of flow rates with high precision.

A further advantage is that a valve with equal percentage characteristic may be manufactured in a cost-efficient manner by machining.

According to one embodiment the adjusting surface of the first adjusting sector has at least partly a surface shape being at least one of a surface having decreasing radius of curvature with increasing distance from the closing sector, a surface having radius of curvature the center of which is offset from the rotor center axis, and a surface formed from several planar surfaces.

The adjusting surface of the first adjusting sector may thus e.g. have a surface shape that is defined by one or more curved surfaces and/or by several aligned planar surfaces.

According to one embodiment the adjusting surface of the first adjusting sector has continuously decreasing radius of curvature with increasing distance from the closing sector.

According to one embodiment the adjusting surface of the first adjusting sector has a surface shape being both a surface having decreasing radius of curvature with increasing distance from the closing sector and a surface having radius of curvature the center of which is offset from the rotor center axis.

According to one embodiment the distance between the chamber wall and the adjusting surface of the first adjusting sector is progressively increasing in order to provide a certain valve characteristic, such as e.g. equal percentage characteristic.

According to one embodiment the distance between the chamber wall and the adjusting surface of the first adjusting sector is continuously increasing in order to provide a smooth adjusting surface.

According to one embodiment the first adjusting sector forms a smooth, continuous adjusting surface with a radius of curvature which gradually decreases.

Preferably, a closing surface of the closing sector has a radius of curvature in the range of 5-75 mm.

Preferably, a first surface portion of the adjusting surface has a radius of curvature in the range of 50-90 percent of the radius of curvature of a closing surface of the closing sector, and more preferably a radius of curvature in the range of 60-80 percent of the radius of curvature of a closing surface of the closing sector.

According to one embodiment the adjusting surface of the first adjusting sector comprises a first surface portion with a first radius of curvature and a second surface portion with a second radius of curvature, wherein the first surface portion is arranged closer to the closing sector than the second surface portion.

Preferably, the second surface portion of the adjusting surface has a radius of curvature in the range of 0-50 percent of the radius of curvature of the first surface portion of the adjusting surface, and more preferably a radius of curvature in the range of 0-30 percent of the radius of curvature of the first surface portion of the adjusting surface, and most preferably a radius of curvature in the range of 10-20 percent of the radius of curvature of the first surface portion of the adjusting surface.

Preferably, the first and second surface portions of the adjusting sector form a smooth surface together with the peripheral surface of the closing sector.

According to one embodiment the closing sector and the first adjusting sector are integrally formed.

According to one embodiment the adjusting surface of the first adjusting sector is parallel along the whole length thereof.

According to one embodiment the adjustment body further comprises a second adjusting sector adjacent to an opposite side of the closing sector. This embodiment has the advantage that soft opening and closing of more than one valve port, e.g. of each of two valve ports in a three-way valve, is enabled.

Preferably, the distance between the chamber wall and an adjusting surface of the second adjusting sector increases gradually with increasing distance from the closing sector. The distance between the chamber wall and the adjusting surface of each adjusting sector may decrease differently or in a similar manner.

According to one embodiment the distance between the chamber wall and the adjusting surface of each adjusting sector decreases identically with increasing distance from the closing sector. The second adjusting sector may thus have the same surface shape the first adjusting sector.

According to one embodiment the valve comprises at least three valve ports.

Preferably, the valve rotor is rotatable between a first closed position, in which a first valve port is fully closed, and a second closed position in which a second valve port is fully closed.

According to one embodiment the valve is a mixing valve.

According to one embodiment the first adjusting sector has, in a circumferential direction, an angular width of 15-45 degrees, more preferably an angular width of 20-40 degrees and most preferably an angular width of 25-35 degrees.

According to a further aspect of the present disclosure there is provided a heating and/or cooling system, such as a domestic heating and/or cooling system, comprising a temperature adjustment valve according to the present disclosure.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows a temperature adjustment valve according to the present disclosure in a perspective view with certain parts being broken away out of explanatory reasons.
Fig. 2 shows the valve rotor of the valve shown in Fig. 1 in a perspective view.
Fig. 3a shows the valve rotor of the valve shown in Fig. 1 in a sectional view.
Fig. 3b shows an enlarged part of Fig. 3a.
Fig. 4 illustrates a domestic heating system comprising a temperature adjustment valve according to an embodiment of the present disclosure.
Figs. 5 a-d illustrate the function of the temperature adjustment valve shown in Fig. 1.
Fig. 6 is illustrates a conventional valve in a sectional view.
Fig. 7 is illustrates the valve shown in Fig. 1 in a sectional view.
Fig. 8 is a sectional view and illustrates a temperature adjustment valve according to a second embodiment of the present invention.

### Description of preferred embodiments

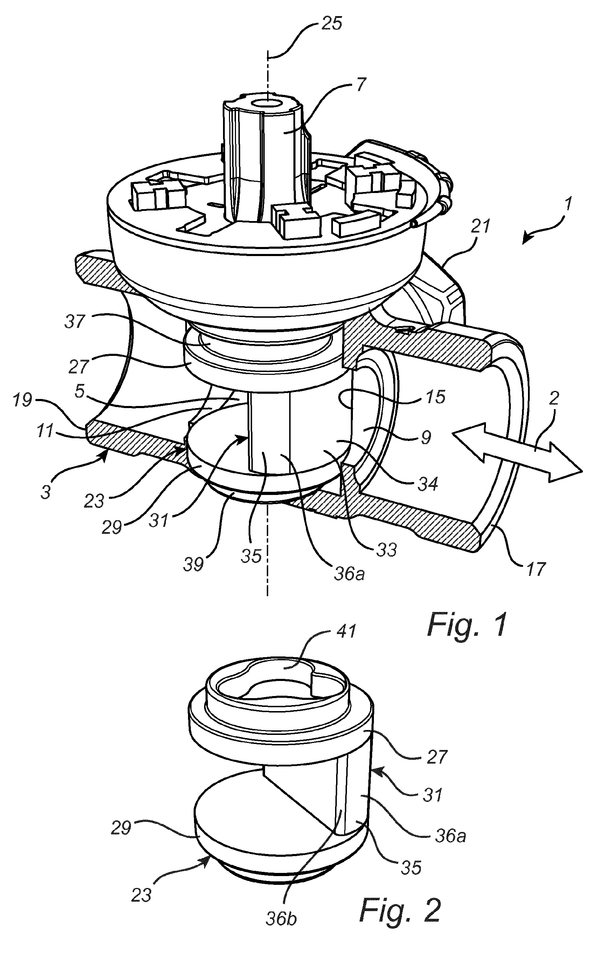

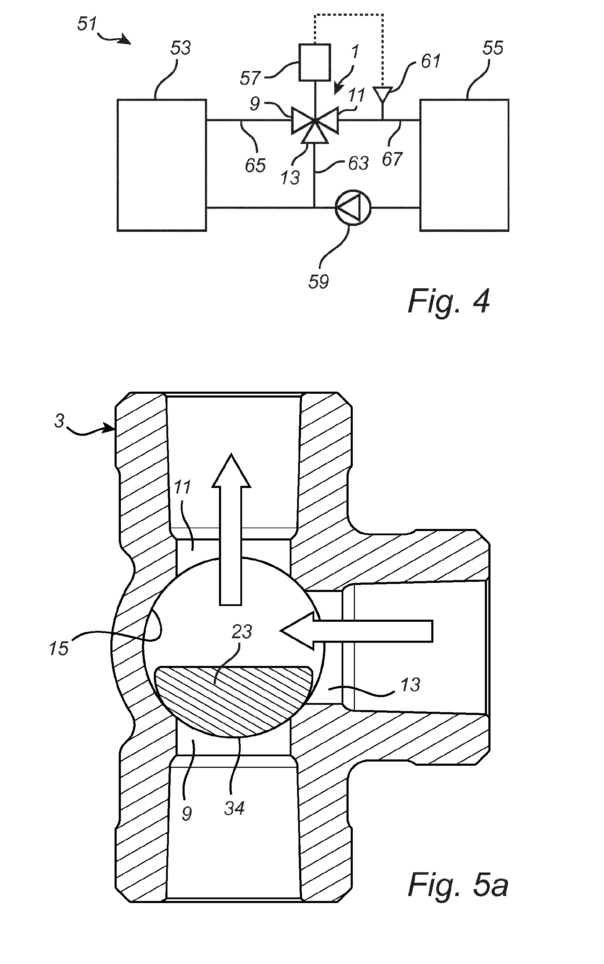

Fig. 1 illustrates a temperature adjustment valve 1 according to an embodiment of the present disclosure. The temperature adjustment valve 1 is intended for adjusting a flow of liquid in a pipe system and may be used e.g. for adjusting liquid flow in a heating and/or cooling system in a building. The temperature adjustment valve 1 may be connected as a mixing valve to mix two streams of fluid, as will be described hereinafter with reference to Figs. 4and 5a-d. Alternatively, the temperature adjustment valve 1 may be connected as a change-over valve or diverting valve. The pipe system as such is symbolically illustrated in Fig. 1 by means of a double arrow 2, that also indicate possible directions of flow.

The temperature adjustment valve 1 comprises a housing 3, defining a circular cylindrical valve chamber 5. An operating spindle 7 is journalled in a leak proof way by means of two O-rings (not shown). The operating spindle 7 is to be connected to a knob for manual valve control, or to an electronic controller for automatic valve control.

The valve chamber 5 of the temperature adjustment valve 1 comprises three ports 9, 11, 13 distributed around a circumferential chamber wall 15, only two of which are visible in Fig. 1. The three ports 9, 11, 13, all of which are illustrated in e.g. Fig. 5a, are thus arranged on equal height around the circumferential chamber wall 15 and are connected to the pipe system 2 mentioned above by means of connecting pieces 17, 19, 21 of the housing 3. The third port 13 and the associated connecting piece 21 are situated perpendicular to each of the other valve ports 9, 11. The size of all three ports 9, 11, 13 is such that intact parts of the circumferential chamber wall 15 remain around all three ports 9, 11, 13.

Inside the chamber 5 of the valve 1 a rotor 23 is rotatably seated. The rotor 23 is rotatable around a rotor center axis 25. As illustrated in the drawings the overall shape of the rotor 23 is circular cylindrical with disk shaped, circular top and bottom walls 27, 29. These are connected to each other by means of a column which forms an adjustment body 31.

The adjustment body 31 comprises a closing sector 33 which is outwardly terminated by a peripheral closing surface 34. The closing surface 34 is aligned with outer contours of the top and bottom walls 27, 29, such that a continuous wall surface is created forming part of said overall circular cylindrical shape of the rotor 23. In a circumferential direction, the closing sector 33 has a size exceeding corresponding sizes of the ports 9, 13 in the circumferential chamber wall 15 in order for the closing sector 33 to form the closing surface 34 which is able to totally cover one of these ports 9, 13 at a time.

The adjustment body 31 further comprises a first adjusting sector 35 connected to the closing sector 33. The first adjusting sector 35 and the closing sector 33 are integrally formed. The peripheral surface of the adjusting sector 35, i.e. the surface that terminates the first adjusting sector 35 outwardly, forms an adjusting surface 36 and the peripheral surface of the closing sector 33 forms the closing surface 34. Each of the adjusting surface 36 and the closing surface 34 is parallel to the rotor center axis 25.

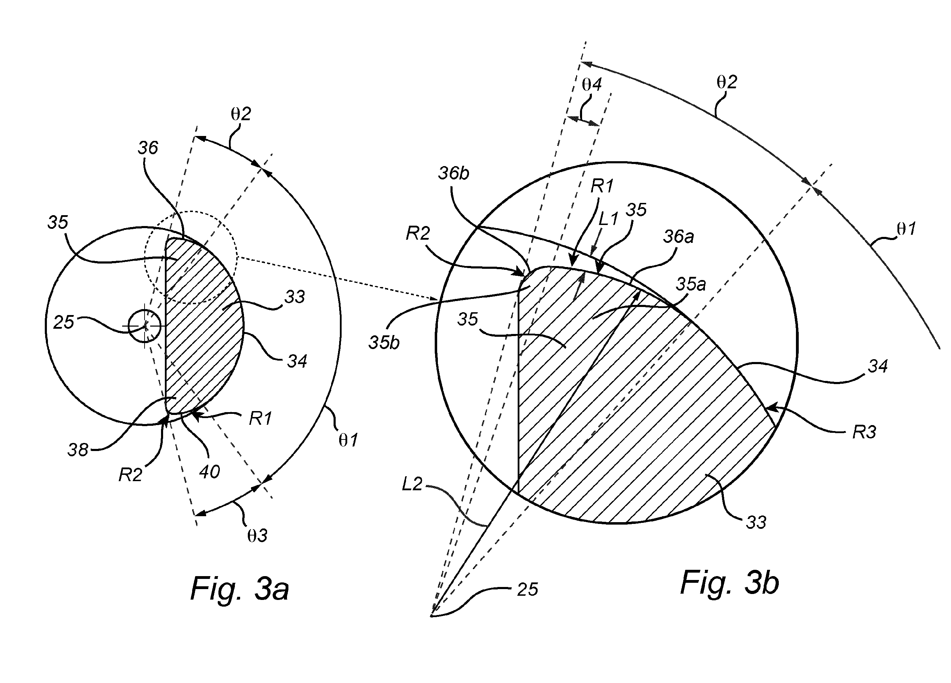

Also, in this embodiment, the adjustment body 31 comprises a second adjusting sector 38 connected to an opposite side of the closing sector 33, as illustrated in Fig. 3a. The second adjusting sector 38, which is also integrally formed with the closing sector 33, has the same shape as the first adjusting sector 35. The second adjusting sector 38 thus forms a second adjusting surface 40 having the same surface shape as the first adjusting surface 36. The two adjusting sectors 35, 38 enable each of the valve ports 9, 13 to be opened and closed in a very soft and controllable manner.

The diameter of the top and bottom walls 27, 29 is slightly less (some hundredths of a millimeter) than the diameter of the valve chamber 5, which means that the rotor 23 fits freely therein.

The top wall 27 comprises a circular cylindrical plateau 37 on top thereof, whereas the bottom wall 29 comprises a circular cylindrical plateau 39 underneath thereof. Said plateaus 37, 39 have diameters smaller than the top and bottom walls 29, 27 as such and are eccentrically arranged in relation thereto with centers aligned with each other and moved slightly (some tenth of a millimeter) in relation to the centers of the top and bottom walls 27, 29 as such in a direction away from said closing surface 33. The plateaus 37, 39 are adapted to hold O-rings (not shown) used to rotatably seat the rotor 23 inside the valve chamber 5, wherein their eccentricity causes said closing surface 33 of the rotor 23 to be permanently biased into abutment against the circumferential chamber wall 15.

As shown in Fig. 2, the top plateau 37 has an upper groove 41, shaped to unrotatably engage with a driver of said operating spindle 7 in order to enable manual or automatic control of the valve 1 by rotating the rotor 23 such that the three ports 9, 11, 13 are opened totally or partly or closed.

The distance L1 between the chamber wall 15 and the first adjusting surface 36 increases gradually with increasing distance from the closing sector 33, as best illustrated in Fig. 3b. The distance L2 between the first adjusting surface 36 and the rotor center axis 25 thus decreases gradually with increasing distance from the closing sector 33. The distance between the chamber wall 15 and the second adjusting surface 40 increases in a corresponding manner, see Fig. 3a.

As best illustrated in Fig. 3b the first adjusting surface 36 is formed by two surface portions 36a, 36b with different radius of curvature. Each of the two surface portions 36a, 36b is defined by the peripheral surface of the adjusting sector 35. The first surface portion 36a, which is situated closer to the closing sector 33 than the second surface portion 36b, has a radius of curvature R1 and the second surface portion 36b has a radius of curvature R2 where R1 is larger than R2. The radius of curvature of the adjusting surface 36 is thus decreasing gradually in a first circumferential direction. In this embodiment R2 is approximately 15 percent of R1.

Each of the surface portions 36a, 36b has a radius of curvature the center of which is offset from the rotor center axis 25 in order to form a smooth adjusting surface 36. Also, the first surface portion 36a has a radius of curvature the center of which is offset from the center of curvature of the second surface portion 36b. Hence, in this embodiment the adjusting surface 36 has a surface shape being both a surface having decreasing radius of curvature R1, R2 with increasing distance from the closing sector 33 and a surface having radius of curvature the center of which is offset from the rotor center axis 25.

The adjusting surface 36 of the first adjusting sector 35 is thus formed to have a smooth, continuous surface by two surface portions 36a, 36b having different radius of curvature.

The closing surface 34 of the closing sector 33 has a radius of curvature R3 which is larger than R1. In this embodiment R3 is about 10 mm and R1 is about 70 percent of R3. The adjustment body 31 is thus formed to have a smooth, continuous surface with two adjusting surfaces 36, 40, each of which has two surface portions with different radius of curvature.

In a circumferential direction, the closing sector 33 has an angular width θ1 of about 90 degrees and each of the adjusting sectors 35, 38 has an angular width θ2, θ3, respectively, of about 30 degrees, as illustrated in Figs.3a-b. Preferably, each adjusting surface 36, 40 has an angular width of 15-45 degrees, more preferably an angular width of 20-40 degrees and most preferably an angular width of 25-35 degrees.

It is realized that an adjusting sector of the adjustment body may be obtained differently. The adjusting surface may e.g. be formed by a surface having gradually or progressively decreasing radius of curvature, or by a surface having one single radius of curvature, e.g. the same radius of curvature R3 as the closing sector 34 but with a center of curvature offset from the rotor center axis 25, or by two or more aligned planar surfaces, or by combinations thereof.

According to one embodiment the first adjusting sector comprises two planar surface portions, wherein a first angle is defined between a tangent at a point in the transition between the closing surface and the first planar adjusting surface portion and the first planar adjusting surface portion, and a second, greater angle is defined between the first and second planar adjusting surface portions of the first adjusting sector.

A temperature adjustment valve according to the present disclosure may e.g. be connected between a heat source, such as e.g. a boiler, and a heat load, such as e.g. a radiator system, of a domestic heating system to regulate water flow to the heat load. The temperature adjustment valve then serves to obtain a required system temperature by adding a suitable proportion of hot water from the heat source to return water from the heat load.

Fig. 4 illustrates a domestic heating system 51 comprising the temperature adjustment valve 1 described hereinbefore with reference to Figs. 1-3. The heating system 51 comprises a heat source in the form of a boiler 53, a heat load in the form of a radiator system 55, the temperature adjustment valve 1, an electronic controller 57 for automatic valve control, a pump 59 and a temperature sensor 61. The temperature sensor 61 is arranged to sense the temperature of the water supplied to the radiator system 55 and is connected to the electronic controller 57, as schematically illustrated by the dashed line in Fig. 4. The electronic controller 57 is configured to automatically control the valve 1. The radiator system 55 is primarily fed by return water from the radiator system 55 through a return water conduit 63. If the temperature of the water supplied to the radiator system 55 is too low hot water from a boiler outlet conduit 65 is added, i.e. mixed with the return water. In this application example, the temperature adjustment valve 1 is thus installed as a mixing valve.

With reference to Figs. 4, 5a-d the function of the temperature adjustment valve 1 will be explained hereinafter. Hence, in this application example, a first valve port, in the form of a first inlet port 13, is fluidly connected to a return water conduit 63 of the radiator system 55, a second valve port, in the form of a second inlet port 9, is fluidly connected to an outlet conduit 65 of the boiler 53 and a third valve port, in the form of an outlet port 11 is fluidly connected to an inlet conduit 67 of the radiator system 55 to supply the system 55 with water having a certain temperature.

In Fig. 5a the second inlet port 9 is totally blocked by the closing surface 34 of the rotor 23 whereas the first inlet port 13 fluidly communicates with the outlet port 11, as indicated by arrows in Fig. 5a. The radiator system 55 is then supplied with return water only via the first inlet port 13.

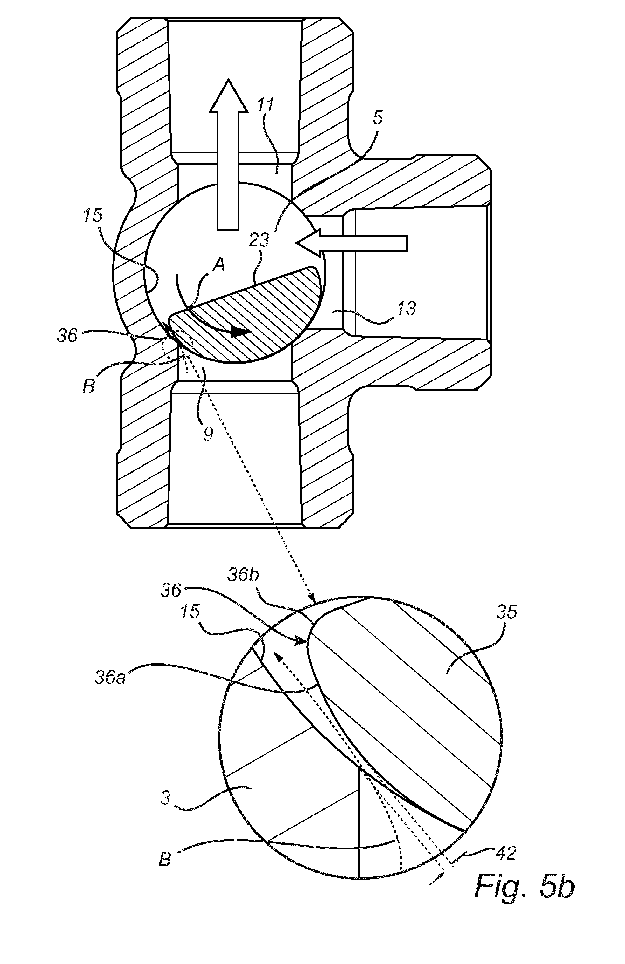

In order to mix hot water from the boiler 53 and return water from the radiator system 55 to achieve a required flow temperature the rotor 23 may be rotated counter clockwise, as illustrated by the arrow A in Fig. 5b. In Fig. 5b the valve rotor 23 has been rotated approximately 15° from the first closed position shown in Fig. 5a to a first mixing position. A small opening gap 42, illustrated in the enlarged part of Fig. 5b, between the adjusting surface 36 of the first adjusting sector 35 and the cylindrical wall 15 allowing hot water from the boiler to enter the valve chamber 5 is then established. Return water from the radiator system 55 is then mixed with hot water from the boiler 53, as illustrated by the arrow B in Fig 5b.

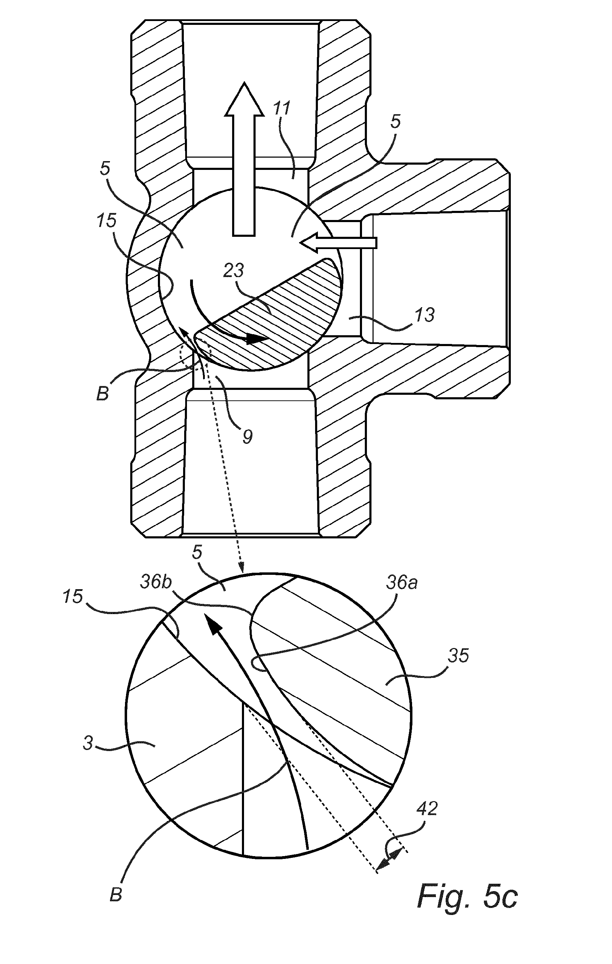

In Fig. 5c the valve rotor 23 has been rotated from the position shown in Fig. 4a to a slightly larger opening angle, i.e. to a second mixing position in which the opening gap 42 to the valve chamber 5 has become slightly larger. Since the opening gap 42 between the adjusting surface 36 and the cylindrical wall 15 has become larger a greater proportion of hot water from the boiler 53 is added to the flow of return water from the radiator system 55 in the second mixing position compared to the proportion of hot water added in the rotor position shown in Fig. 5b, i.e. in the first mixing position.

Hence, an opening gap 42 between the adjusting surface 36 and the circumferential chamber 15 wall with continuously increasing cross-sectional area is formed as the rotor 23 is rotated from the first closed position (Fig. 5a), in which the second valve port 9 is closed, to the second mixing position (Fig. 5c). Initially, the size of the opening gap 42 thus increases in a direction across the circumferential chamber wall 15 as the rotor 23 rotates, which enables a very soft and controlled opening of the second inlet port 9.

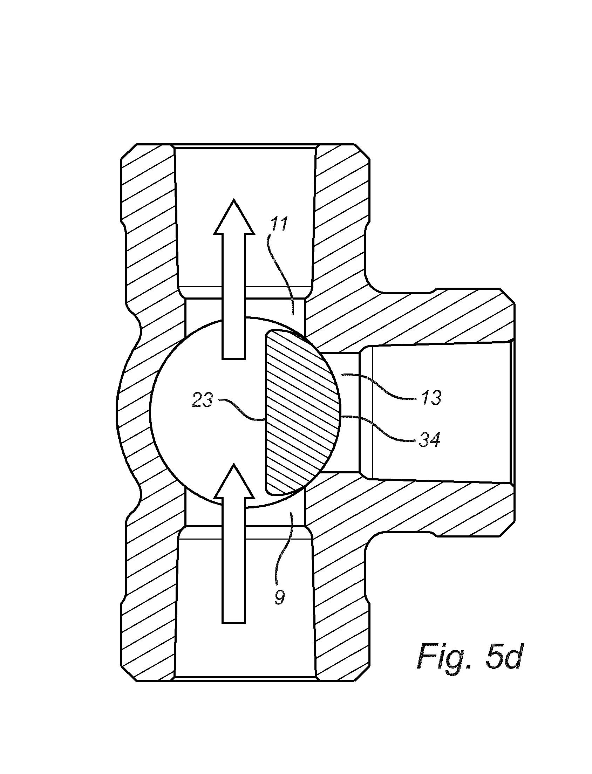

In Fig. 5d the valve rotor 23 has been rotated 90° from the position shown in Fig. 5a, i.e. from the first closed position, to a second closed position, in which the first inlet port 13 is closed by the closing surface 34 of the rotor 23. Then, the radiator system 53 is supplied only with hot water from the boiler 53.

The rotor 23 is thus movable between a first closed position (Fig. 5a), in which the second inlet port 9 is totally blocked by the closing surface 34 of the rotor 23, and a second closed position (Fig. 5d), in which the first inlet port 13 is totally blocked by the closing surface 34 of the rotor 23. In intermediate positions, i.e. in mixing positions, hot water and return water are mixed.

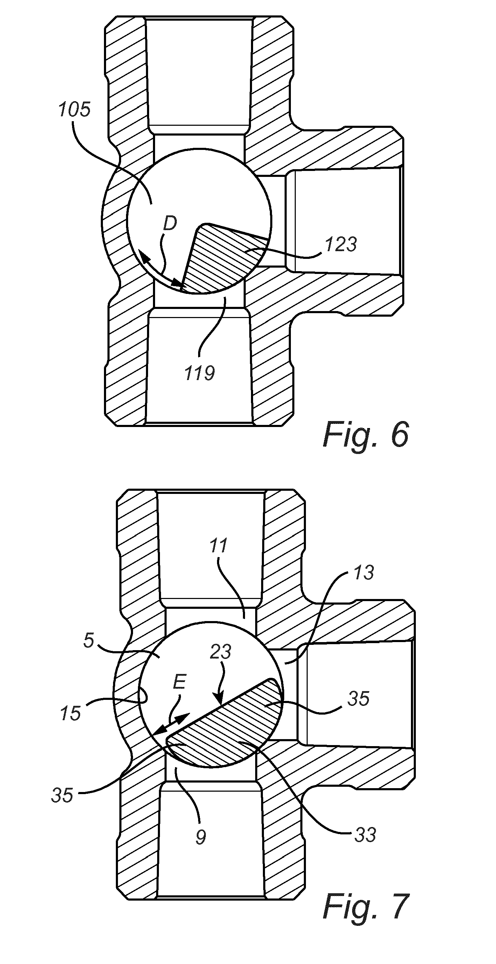

The adjusting surfaces 36, 40 enable the valve port 9 to be opened and closed in a very soft and controllable manner. To further illustrate this, opening of a valve port 9 in a valve according to the present disclosure (Fig. 7) is hereinafter compared to opening of a valve port 109 in a conventional valve (Fig. 6) with reference to Figs. 6-7.

Fig. 6 illustrates a conventional valve where the valve rotor 123 has been rotated 30 degrees from a position in which a valve port 119 is totally blocked by the valve rotor 123. Then a relatively large opening to the valve chamber 105, i.e. orifice pass area, is established. In such a conventional valve the cross-sectional area of the opening to the valve chamber 105 increases along a circumferential direction as the opening angle of the rotor 123 is increased, as illustrated by arrow D in Fig. 6. A valve with a rotor shape as the one 123 shown in Fig. 6 exhibits a linear opening characteristic, i.e. the flow rate is directly proportional to the rotation of the valve rotor 123. In such a conventional valve there is thus a linear relationship between the valve rotor angle and the opening size.

Fig. 7 illustrates a valve according to the present disclosure where the valve rotor 23 has been rotated 30 degrees from a position in which the valve port 9 is totally blocked by the valve rotor 23. In this position the opening gap 42, illustrated in Figs. 4b-c, to the valve chamber 5 is relatively small, i.e. a relatively small orifice pass area is established.

Hence, in a valve according to the present disclosure the opening gap to the valve chamber 5 initially increases across a circumferential direction of the valve chamber as the opening angle increases, as illustrated by arrow E in Fig. 7. At larger opening angles, such as e.g. 30 degrees or larger, the pass area increases along a circumferential direction as the opening angle of the rotor 23 is increased and thus the pass area increases more rapidly at later stages of the valve port opening. A valve with an adjusting sector 35 according to the present disclosure thus exhibits a progressive opening and closing characteristic, such as e.g. equal percentage characteristic.

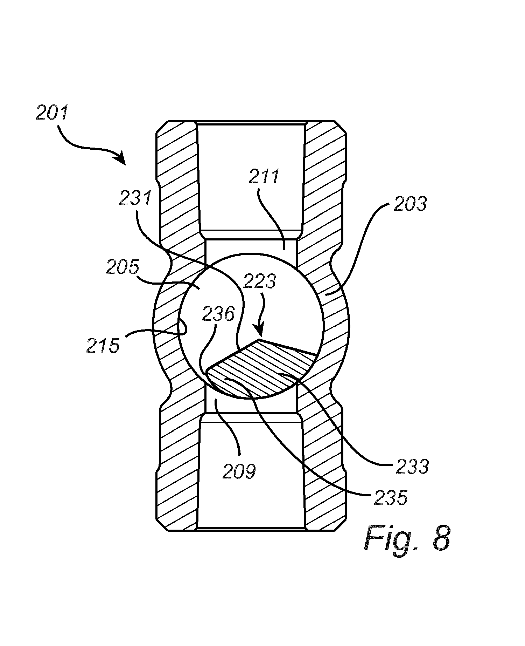

Fig. 8 illustrates a temperature adjustment valve 201 according to a second embodiment of the present disclosure. Essentially all features disclosed in the first embodiment are also present in the second embodiment with reference numerals identifying similar or same features. Having mentioned this the description will focus on explaining the differing features.

The temperature adjustment valve 201 differs from the temperature adjustment valve 1 described with reference to Figs. 1-5d in that it has only two valve ports 209, 211 and in that the adjustment body of the rotor 223 comprises one single adjusting sector 235, as illustrated in Fig. 8. The adjusting sector 235 allows the valve port 209 to be opened and closed in a very soft and controllable manner.

It will be appreciated that numerous variants of the embodiments described above are possible within the scope of the appended claims.

Hereinbefore, with reference to Figs. 1-5d, is has been described that the adjustment body may comprises two adjusting sectors in order to enable soft opening and closing of each of a first and a second valve port in a temperature adjustment valve having three valve ports. It is appreciated that the closing sector of a temperature adjustment valve having three or more valve ports may comprise one single adjusting sector, i.e. it may have an adjustment body as the one illustrated in Fig. 8, thereby enabling soft opening and closing of at least one single valve port.

It is obvious that the layout of the temperature adjustment valve 1 described above can be varied in different ways especially when it comes to the solution used to bias the rotor 23. Further, it is obvious that the number of ports of a temperature adjustment valve can be two, as described hereinbefore with reference to Fig. 8, or three, as described hereinbefore with reference to Fig. 1, or exceed the number of three, which, however, is the most common one within the field.

## Claims

1. Temperature adjustment valve (1; 201) for adjusting liquid flow in a heating and/or cooling system, the valve comprising:
a cylindrical valve chamber (5; 205) having at least two valve ports (9, 11, 13; 209, 211) distributed around a circumferential chamber wall (15; 215) of the valve chamber (5; 205), and
a rotor (23; 223), which is rotatably seated inside said valve chamber (5; 205) and rotatable around a rotor center axis (25), wherein the rotor (23; 223) comprises an adjustment body (31; 231) having a closing sector (33; 233) arranged to sealingly contact the circumferential chamber wall (15; 215) and to close at least one of said valve ports (9, 11, 13; 209, 211),
**characterized in**
the adjustment body (31) further comprising a first adjusting sector (35; 235) arranged adjacent to the closing sector (33; 233), wherein a distance (L1) between the chamber wall (15; 115) and an adjusting surface (36; 236) of the first adjusting sector (35; 235) gradually increases with increasing distance from the closing sector (33; 233), at least along a portion of the adjusting surface (36; 236).

2. Temperature adjustment valve according to claim 1, wherein the adjusting surface (36; 236) has at least partly a surface shape being at least one of:
i) a surface (36) having decreasing radius of curvature (R1, R2) with increasing distance from the closing sector (33; 233),
ii) a surface (36; 236) having radius of curvature the center of which is offset from the rotor center axis (25), and
iii) a surface formed from several planar surfaces.

3. Temperature adjustment valve according to any of the preceding claims, wherein said distance (L1) between the chamber wall (15; 215) and the adjusting surface (36; 236) increases progressively.

4. Temperature adjustment valve according to any of the preceding claims, wherein a first surface portion of the adjusting surface has a radius of curvature in the range of 50-90 percent of the radius of curvature of a closing surface of the closing sector, and more preferably a radius of curvature in the range of 60-80 percent of the radius of curvature of a closing surface of the closing sector.

5. Temperature adjustment valve according to any of the preceding claims, wherein the adjusting surface (36; 236) of the first adjusting sector (35; 235) comprises a first surface portion (36a) with a first radius of curvature (R1) and a second surface portion (36b) with a second radius of curvature (R2).

6. Temperature adjustment valve according to claim 5, wherein said second radius of curvature (R2) is in the range of 0-50 percent of said first radius of curvature (R1).

7. Temperature adjustment valve according to claim 5 or 6, wherein the first (36a) and second (36b) surface portions together form a smooth adjusting surface (36; 236).

8. Temperature adjustment valve according to any of the preceding claims, wherein the adjustment body (31) further comprises a second adjusting sector (38) adjacent to an opposite side of the closing sector (33).

9. Temperature adjustment valve according to any of the preceding claims, wherein the valve (1) comprises at least three valve ports (9, 11, 13).

10. Temperature adjustment valve according to any of the preceding claims, wherein, the valve rotor (23) is rotatable between a first closed position, in which a first valve port (9) is fully closed and a second closed position in which a second valve port (11) is fully closed.

11. Temperature adjustment valve according to claim 9 or 10, wherein the valve (1) is a mixing valve.

12. Temperature adjustment valve according to any of the preceding claims, wherein, in a circumferential direction, the first adjusting sector (35; 235) has an angular width (θ2) of 15-45 degrees, more preferably an angular width (θ2) of 20-40 degrees and most preferably an angular width (θ2) of 25-35 degrees.

13. Heating and/or cooling system comprising a temperature adjustment valve (1; 201) according to any of the preceding claims.
